# EUROPÄISCHE PATENTSCHRIFT

(11) **EP 2 178 063 B1**
(45) Veröffentlichungstag und Bekanntmachung des Hinweises auf die Patenterteilung: **07.06.2017**
(21) Anmeldenummer: 09168064.5
(22) Anmeldetag: 18.08.2009
(51) Int. Cl.: G08G 1/16, G01B 11/24, G01C 21/26, B60W 30/08

(54) **Fahrerassistenzsystem für Kraftfahrzeuge**
Driver assistance system for motor vehicles
Système d'assistance à la conduite embarqué dans un véhicule automobile

(30) Priorität: 14.10.2008 DE 102008042825
(43) Veröffentlichungstag der Anmeldung: 21.04.2010
(73) Patentinhaber: Robert Bosch GmbH, 70442 Stuttgart (DE)
(72) Erfinder: Garbaa, Kieredin Allister, 70180, Stuttgart (DE); Knoll, Stefan, 71229, Leonberg (DE); Irion, Albrecht, 70563, Stuttgart (DE); Kersken, Ulrich, 31199, Diekholzen (DE)

(56) Entgegenhaltungen:
- EP-A2- 1 245 443
- EP-A2- 1 482 280
- EP-A2- 1 772 840
- WO-A1-2008/088880
- US-A1- 2005 060 069

## Beschreibung

Die Erfindung betrifft ein Fahrerassistenzsystem für Kraftfahrzeuge nach den Ansprüche.

### Stand der Technik

Aus dem Stand der Technik sind einerseits handelsübliche Navigationssysteme und Einparkhilfen für Kraftfahrzeuge bekannt.

Außerdem ist aus der Druckschrift JP 2006163501 A eine Kontrolleinheit für ein Head-Up-Display (HUD) bekannt, durch die Markierungen über den korrekten Abstand in Bezug auf ein vorausfahrendes Fahrzeug angezeigt werden können.

Aus der Druckschrift DE 198 47 611 A1 ist ein Verfahren zur integrierten Darstellung der Parameter eines kombinierten ADR-/GRA-Systems bekannt (ADR: Automatische Distanzregelung, GRA: Geschwindigkeitsregelanlage).

Im Zusammenhang mit Head-Up-Displays ist aus der Druckschrift US 2001/0040534 A1 ein HUD System zur Anzeige von Objekten in der Umgebung eines Kraftfahrzeugs, unter anderem auch zur Ausgabe von Warnhinweisen, bekannt.

Aus der US 2005/0060069 A1 ist ein Verfahren und ein System zur Steuerung eines Fahrzeugs bekannt. Unter Berücksichtigung von Kartendaten und Sensordaten wird eine Überhol-Situation eines Fahrzeugs bestimmt. Ist die Situation gefährlich, so wird in den Antriebsstrang des Fahrzeugs eingegriffen.

### Offenbarung der Erfindung

Aufgabe der Erfindung ist es, ein verbessertes Fahrerassistenzsystem für Kraftfahrzeuge vorzuschlagen, durch welches die Sicherheit im Straßenverkehr erhöht werden kann. Die Aufgabe wird ausgehend von einem Fahrerassistenzsystem für Kraftfahrzeuge der eingangs genannten Art durch die kennzeichnenden Merkmale des Anspruchs 1 gelöst.

Durch die Merkmale der abhängigen Ansprüche sind vorteilhafte Ausführungsbeispiele und Weiterbildungen der Erfindung möglich.

Dementsprechend zeichnet sich ein erfindungsgemäßes Fahrerassistenzsystem für Kraftfahrzeuge mit wenigstens einer Sensorvorrichtung zur Erfassung und Positionsbestimmung von Objekten in der Umgebung des Kraftfahrzeugs, mit wenigstens einer Auswerteeinheit zur Verarbeitung und/oder Auswertung der Sensordaten der Sensorvorrichtung sowie Weiterleitung an eine Anzeigevorrichtung dadurch aus, dass die Auswerteeinheit Mittel zur Korrektur von Messfehlern umfasst, die eine Mehrzahl von Sensordaten wenigstens einer Sensorvorrichtung in Bezug auf ein Objekt heranziehen, um daraus eine Koordinate des Objekts zu bestimmen bzw. ein erfindungsgemäßes Fahrerassistenzsystem für Kraftfahrzeuge dadurch aus, dass die Auswerteeinheit Mittel zur Korrektur von Messfehlern umfasst, die Umgebungskoordinaten eines Navigationssystems zusammen mit Sensordaten wenigstens einer Sensorvorrichtung in Bezug auf ein Objekt heranziehen, um daraus eine Koordinate des Objekts zu bestimmen.

Sensorvorrichtungen, insbesondere auch solche zur Erfassung und Positionsbestimmung von Objekten in der Umgebung eines Beobachters, führen Messungen durch. Die somit erhaltenen Sensordaten und/oder Umgebungskoordinaten können mit einer Reihe von Messfehlern behaftet sein. Es kann sich dabei sowohl um systematische als auch statistische Messfehler handeln. Systematische Messfehler werden dabei in der Regel durch die Messmethodik selbst bedingt. Gerade im Zusammenhang mit Fahrerassistenzsystemen kann das Auftreten derartiger Messfehler den Fahrer erheblich verunsichern, unter Umständen sogar gefährden. Beispielsweise kann infolge von Messfehlern die Position eines Objektes wie beispielsweise eines Hindernisses oder eines weiteren, am Straßenverkehr beteiligten Kraftfahrzeugs falsch angezeigt werden. Die genannten Nachteile können dadurch behoben werden, dass die Auswerteeinheit Mittel zur Korrektur von Messfehlern umfasst, die Sensordaten wenigstens einer Sensorvorrichtung in Bezug auf ein Objekt bzw. zusätzlich die Umgebungskoordinaten eines Navigationssystems heranziehen, um daraus eine Koordinate des Objekts zu bestimmen. Es können z.B. auch neue Objektkoordinaten berechnet werden.
Der Fahrer ist nicht mehr darauf angewiesen, sich darauf zu verlassen, dass die verwendeten Sensordaten bzw. Umgebungskoordinaten nicht gerade zum aktuellen Zeitpunkt so genannte "Messausreißer" darstellen und somit eine unter Umständen von der Wirklichkeit sehr weit entfernte Angabe anzeigen.

Im Übrigen ist im Sinne der Erfindung unter Sensordaten ein allgemeiner Begriff für Daten bzw. Messwerte von Sensoren, z.B. Kameraeinheiten, fahrzeuginternen oder -externen Mess- und Bestimmungssystemen zu verstehen. Umgebungskoordinaten sind folglich im Sinne der Erfindung Sensordaten oder z.B. Daten eines Navigationssystems, die Auskunft über die Position von Objekten in der Umgebung des Kraftfahrzeugs liefern.

Grundsätzlich können sehr präzise Positionsbestimmungen über ein sogenanntes Navigationssystem gewonnen werden. Hierbei wird die Position des Fahrzeugs ermittelt und mit Informationen eines bestehenden Straßenkartensystems in Zusammenhang gebracht. Ein derartiges Navigationssystem kann sich daher hervorragend dazu eignen, entsprechende Umgebungskoordinaten an die Auswerteeinheit zu liefern und somit gleichfalls zu einer verbesserten Korrektur von Messfehlern beitragen.

Des Weiteren kann bei einem erfindungsgemäßen Fahrerassistenzsystem die Auswerteeinheit Mittel zur Korrektur von Messfehlern umfassen, die den Sensordaten einer Sensorvorrichtung weitere Sensordaten einer anderen Sensorvorrichtung zuordnet werden und daraus weitere Daten erzeugt. Es können also beispielsweise die Sensordaten einer Sensorvorrichtung mit denen einer weiteren Sensorvorrichtung verglichen werden, so dass daraus geschlossen werden kann, ob Sensordaten bei einer Messung verlässlich bzw. plausibel sind oder nicht. Beispielsweise könnte einem Fahrzeug, dessen Koordinaten ermittelt wurden, mit Hilfe von Umgebungskoordinaten eines Navigationssystem eine Fahrspur zugeordnet werden, wobei das Navigationssystem das Fahrzeug z.B. als "Geisterfahrer" erkennt. Beispielsweise könnte dem Fahrzeug auch eine Position außerhalb jeglicher Fahrspur zugeordnet werden, sodass es sich entweder um eine außergewöhnliche Situation, z.B. einen Unfall, oder eventuell auch eine unplausible Zuordnung handelt.

Bei einer vorteilhaften Ausführungsform der Erfindung umfasst die Auswerteeinheit Mittel zur Korrektur von Messfehlern, welche den Koordinaten des Objekts Sensordaten und/oder Umgebungskoordinaten eines Navigationssystems zuordnet und hieraus weitere Daten erzeugt. Dies bedeutet, dass beispielsweise die von der Auswerteeinheit ermittelten Koordinaten eines Objekts mit Sensordaten oder Umgebungskoordinaten eines Navigationssystems in Verbindung gebracht werden können, um somit weitere Informationen zu erhalten.

Bei einem besonders bevorzugten Ausführungsbeispiel der Erfindung umfasst die Auswerteeinheit eine statistische Mittelungseinheit zur Mittelung von Sensordaten und/oder Umgebungskoordinaten. Eine statistische Mittelung ist eine vergleichsweise einfache und zweckmäßige Maßnahme, um Korrekturen von Messfehlern vorzunehmen. Insbesondere statistische Fehler können so in der Regel korrigiert werden. Besonders vorteilhaft kann eine Mittelung jedoch auch dann erfolgen, wenn zur Korrektur insbesondere von systematischen Fehlern nicht nur über verschiedene Sensordaten bzw. Umgebungskoordinaten gemittelt wird, die einem einzelnen Sensor zugeordnet werden können, sondern auch über solche Messwerte gemittelt wird, die von wenigstens zwei verschiedenen Sensoren stammen. Außerdem ist es möglich, weitere Erfahrungswerte mit einzubringen, beispielsweise können bei einer solchen Mittelung auch unterschiedliche Sensordaten und/oder Umgebungskoordinaten mit speziellen Gewichtungen versehen werden. Denkbar ist beispielsweise, dass einem speziellen Sensor eine relativ hohe Verlässlichkeit zugebilligt werden kann. Die Daten dieses Sensors könnten daher z.B. bei einer Mittelung stärker gewichtet werden als andere Sensordaten bzw. Umgebungskoordinaten.

Insbesondere ist dafür notwendig, dass bei einer bevorzugten Weiterbildung der Erfindung wenigstens eine weitere Sensorvorrichtung und/oder eine Kamera zur Lieferung von Sensordaten und/oder Umgebungskoordinaten an die Auswerteeinheit vorgesehen ist/sind. Wie bereits erwähnt, kann es unter anderem zur Korrektur systematischer Fehler vorteilhaft sein, die Daten bzw. Umgebungskoordinaten mehrerer verschiedener Sensorvorrichtungen, eventuell auch von unterschiedlichen Bautypen, mit einzubeziehen. Einerseits sind dabei Sensorvorrichtungen zur Erfassung bzw. Positionsbestimmung von Objekten der Umgebung des Kraftfahrzeugs unter anderem gemeint. Andererseits ist es auch denkbar, andersartige Sensorvorrichtungen zusätzlich einzusetzen, beispielsweise solche Sensoren, welche Informationen über die Sichtverhältnisse liefern, z.B. ob die Sicht gerade durch Nebel oder Regen beeinflusst wird. Diese Informationen könnten beispielsweise unter anderem zu einer Anpassung der Gewichtung bei der Mittelung Verwendung finden.

Als Sensorvorrichtung ist beispielsweise auch eine Kamera denkbar. Sowohl mittels einer derartigen Kamera als auch infolge einer Durchführung mehrerer Messungen hintereinander durch wenigstens eine Sensorvorrichtung ist es bei Ausführungsbeispielen der Erfindung möglich, auch bewegte Objekte darzustellen.

Weitere denkbare Umfeldsensoren sind beispielsweise RADAR, LIDAR, insbesondere zur Längsführung des Fahrzeugs, insbesondere im Zusammenhang mit ACC-Systemen (Englisch: Active/Adaptive Cruise Control, Abstands- und Geschwindigkeitsregler), Umfeldsensoren für Sicherheitsanwendungen, z.B. PSS (Prodecitve safety system, Fahrzeugbremssystem), weitere Umfeldsensoren z.B. für Parksysteme wie Parkpiloten, erweiterte Parkpilotsysteme oder sogenannte "Backing-aid-Syteme", aber auch Umfeldsensoren für Überwachungsfunktionen des Fahrzeugrück- bzw. Fahrzeugseitenraums (LCA). Denkbar ist auch die Verwendung von 3D-Darstellungen.

Neben der bloßen Erkennung von Objekten wie anderen Fahrzeugen oder potentiellen Verkehrshindernissen kann es jedoch von besonderem Vorteil sein, bei einer bevorzugten Ausführungsform der Erfindung eine Sensorvorrichtung zur Erkennung einer Fahrspur vorzusehen. Für den Fahrer kann es durchaus hilfreich sein, nicht nur die Koordinaten eines bestimmten Objektes zu kennen oder den Abstand, den dieses Objekt zu seinem Fahrzeug besitzt, sondern z.B. auch, welche Position ein entsprechendes Objekt in Bezug auf seine Fahrspur hat. Besonders wichtige Beispiele hierfür sind etwa ein Tier, das sich unmittelbar am Fahrbahnrand befindet, ein Geisterfahrer oder ein anderes, entgegenkommendes Fahrzeug, das beispielsweise ein gefährliches Überholmanöver durchführt. In diesem Kontext existieren zahlreiche Ausgestaltungen von Ausführungsbeispielen der Erfindung, beispielsweise eine Bestimmung des Abstands zum Fahrbahnrand, welche etwa bei der Durchfahrt durch Baustellen korrigiert werden sollte oder eine Abstandsbestimmung zu parkenden Fahrzeugen.

In einigen Fällen reicht es jedoch nicht aus, allein Angaben über die Position zu kennen. Vielmehr ist es außerdem notwendig, Informationen über die Relativgeschwindigkeiten zwischen dem Kraftfahrzeug und anderen Objekten zu kennen oder zumindest einschätzen zu können. Insbesondere ist hierbei an Situationen zu denken, wenn das Kraftfahrzeug z.B. ein Überholmanöver durchführt oder sich Kraftfahrzeugen nähert, die in einem Stau stehen. Einerseits ist es denkbar, im Sinne der bereits oben genannten Ausführungsbeispiele, spezielle Geschwindigkeitssensoren bei einer Weiterbildung der Erfindung vorzusehen. Es ist aber auch denkbar, bei einer Ausführungsform der Erfindung die Auswerteeinheit so auszulegen, dass sie zur Bestimmung der Relativgeschwindigkeiten zwischen dem Kraftfahrzeug und anderen Objekten geeignet ist.

Denkbar ist es weiterhin, dem Fahrer während der Fahrt gewisse Entscheidungshilfen und Zusatzinformationen in Form von Gefährdungsgrößen an die Hand zu geben. Beispielsweise kann aus der Relativgeschwindigkeit zwischen dem Kraftfahrzeug und einem Objekt bzw. aus der Position eines Objekts eine derartige Gefährdungsgröße bestimmt werden, deren Wert der Einstufung des Gefährdungspotentials in eine vorgegebene Skala erlaubt. Somit ist es vorteilhaft, bei einer Weiterbildung der Erfindung die Auswerteeinheit dazu auszulegen, dass eines der Objekte mit einer Gefährdungsgröße unter anderem aus der Position und/oder der Relativgeschwindigkeit zwischen dem Fahrzeug und dem Objekt verknüpfbar ist.

Unter anderem ist es in diesem Kontext vorteilhaft, bei einer Ausführungsform der Erfindung, Warnvorrichtungen vorzusehen. Somit können z.B. entsprechende Gefährdungsgrößen nicht nur bestimmt werden sondern lösen auch Warnhinweise für den Fahrer bzw. den Benutzer aus. Dabei kann es sich um Einfärbungen spezieller Objekte, z.B. in Rot, aber auch um akustische Warnhinweise, Blinkanzeigen oder Ähnliches handeln. Auch hierdurch kann die Sicherheit für den Fahrer noch einmal erheblich verbessert werden.

Vorteilhafterweise ist bei einem Ausführungsbeispiel der Erfindung eine Anzeigevorrichtung vorhanden, in besonders bevorzugter Weise ein HUD. Derartige Projektionsanzeigevorrichtungen existieren bereits als etablierte Anzeigesysteme in Kraftfahrzeugen, Flugzeugen usw. Denkbar sind hier des Weiteren alle Ausgestaltungsformen von HUDs wie z.B. i-HUDs (Inverse HUD), welche über ein Fahrerbeobachtungssystem verfügen, HUDs zur kontaktanalogen Darstellung und vieles mehr. Die Verwendung bereits etablierter Anzeigevorrichtungen kann auch einen entscheidenden Kostenvorteil bewirken.

Denkbar sind aber ohne Weiteres auch andere Anzeigemöglichkeiten, welche in vorteilhafter Weise das Fahrerassistenzsystem an die individuellen Wünsche des Benutzers bzw. Fahrers anpassbar macht. Bei einer bevorzugten Weiterbildung der Erfindung kann somit die Anzeigevorrichtung als PDA (Englisch: personal digital assistant) bzw. als Navigationsanzeige eines Navigationssystems bzw. als Kopfstützendisplay, welches als Anzeigevorrichtung in die Kopfstützen eines Fahrzeugs, insbesondere für die Formpassagiere integriert ist, ausgebildet sein. Es sind also verschiedene Varianten von externen Anzeigevorrichtungen als auch von fahrzeuginternen Anzeigevorrichtungen zur Benutzung möglich. Als mögliche Vorteile sollte hier neben dem Kostenaspekt insbesondere auch auf die möglichen Synergien einzelner Assistenzsysteme für das Fahrzeug aber auch einzelner Computersysteme (z.B. PDA) usw. abgestellt werden.

Eine gängige Art und Weise der Anzeigedarstellung ist die Integration von Anzeigeinstrumenten im Kombi-Instrument des Kraftfahrzeugs. Daher ist bei einem vorteilhaften Ausführungsbeispiel der Erfindung die Anzeigevorrichtung im Kombiinstrument des Kraftfahrzeugs integriert.

Bei einer besonders bevorzugten Weiterbildung der Erfindung ist das Fahrerassistenzsystem in Fahrzeuge mit bereits vorhandenen Sensorvorrichtungen und/oder Anzeigevorrichtungen und/oder Navigationssystemen integrierbar. Viele Fahrzeuge verfügen bereits über Anzeigevorrichtungen wie HUDs, über Navigationssysteme oder einzelne Sensorvorrichtungen. Müssten zur Verwendung eines erfindungsgemäßen Fahrerassistenzsystems bzw. einer Ausführungsform der Erfindung alle diese Vorrichtungen aus Kompatibilitätsgründen erneuert werden, wäre die Anschaffung eines solchen Fahrerassistenzsystems mit einem erheblichen Kostennachteil verbunden. Ein integrierbar gesaltetes Fahrerassistenzsystem jedoch erlaubt es, zumindest einige dieser Vorrichtungen zu nutzen. Außer dem Kostenvorteil muss sich der Fahrer unter Umständen auch nicht mehr auf völlig neue Apparaturen in seinem Kraftfahrzeug einstellen und gewöhnen. Z.B. könnte die gleiche HUD in gewohnter Weise weiter verwendet werden, dem Fahrer jedoch zusätzliche Informationen bereit stellen und somit den Fahrkomfort entscheidend verbessern und auch zur erhöhten Sicherheit im Straßenverkehr beitragen.

Je nach dem, welche Fahrsituation gerade vorliegt oder welche Anzeigedarstellung vom Fahrer in individueller Weise bevorzugt wird, kann z.B. die Auswerteeinheit so ausgelegt sein, dass sie die Sensordaten, Umgebungskoordinaten bzw. Gefährdungsgrößen usw. in der entsprechenden Weise aufbereitet und ausgeben lässt. Ein Ausführungsbeispiel der Erfindung umfasst vorteilhafterweise eine Auswerteeinheit, die zur Erzeugung einer perspektivischen Darstellung ausgelegt ist. Diese Darstellungsweise bietet den Vorteil, dass der Fahrer etwa aus seiner Sicht oder von einem scheinbar etwas erhöhten Standpunkt, Objekte, Fahrbahnen usw. in der Umgebung des Fahrzeugs wahrnehmen kann.

Erfindungsgemäß ist bei einer Ausführungsform der Erfindung die Auswerteeinheit zur Erstellung einer Darstellung wenigstens eines Teils der Umgebung auf der Vogelperspektive ausgelegt. Dies ist insbesondere dann wünschenswert, wenn beispielsweise Objekte, welche um das Kraftfahrzeug herum stehen können, von Bedeutung sind und nicht nur beispielsweise der Blick in Fahrtrichtung. Eine typische Situation ist das Rückwärtseinparken.

Entsteht für den Fahrer bzw. für das Kraftfahrzeug eine gefährliche Situation, indem beispielsweise einzelne Objekte in bedenklicher Nähe zum Kraftfahrzeug auftauchen, ist es wünschenswert, einen entsprechenden Hinweis an den Fahrer auszugeben. Eine bevorzugte Ausführungsform der Erfindung umfasst dabei eine Auswerteeinheit, die zur Zuordnung von Gefährdungsgrößen und Farben für die Darstellung mittels der Anzeigevorrichtung ausgelegt ist.

Andere Größen wie beispielsweise die Geschwindigkeit eines anderen Objektes, die Relativgeschwindigkeit des Objektes in Bezug auf die des Kraftfahrzeugs oder beispielsweise einzelne Abstände, können auch konkret angezeigt und/oder einzelnen Objekten zugeordnet werden. Bei einem vorteilhaften Ausführungsbeispiel der Erfindung ist daher die Auswerteeinheit zur Ausgabe und Darstellung alphanumerischer Größen ausgelegt. Generell ist es besonders vorteilhaft, wenn entweder der Fahrer die Darstellungsweise seinen Wünschen entsprechend anpassen kann oder diese entsprechend den einzelnen Situationen bereits angepasst sind.

Außerdem zeichnet sich dementsprechend das Verfahren zur Feststellung einer Objektposition und Optimierung von positionsbezogenen Objektanzeigen gemäß der Erfindung dadurch aus, dass eine Korrektur von Messfehlern mittels eines Fahrerassistenzsystems nach Anspruch 1, 2 oder 3 bzw. einem der abhängigen Ansprüche erfolgt. Durch ein derartiges Verfahren können dem Fahrer plausiblere und wirklichkeitsgetreuere Auskünfte zur Verfügung gestellt werden und somit dem Fahrer eine wertvolle Hilfestellung geben, um den Straßenverkehr sicherer zu gestalten.

### Ausführungsbeispiel

Ausführungsbeispiele der Erfindung sind in den Zeichnungen dargestellt und werden nachstehend unter Angabe weiterer Vorteile und Einzelheiten näher erläutert. Im Einzelnen zeigen:
- Figur 1: eine schematische Darstellung einer Umgebungsmessung mit einer Straße mit zwei Fahrspuren sowie verschiedenen Objekten in der Vogelperspektive,
- Figur 2: eine schematische Anzeigedarstellung einer Straße mit zwei Fahrspuren aus der Vogelperspektive mit einer Positionskorrektur eines Objekts sowie
- Figur 3: eine schematische Kombinationsdarstellung von Umgebungsanzeigen in verschiedenen Perspektiven.

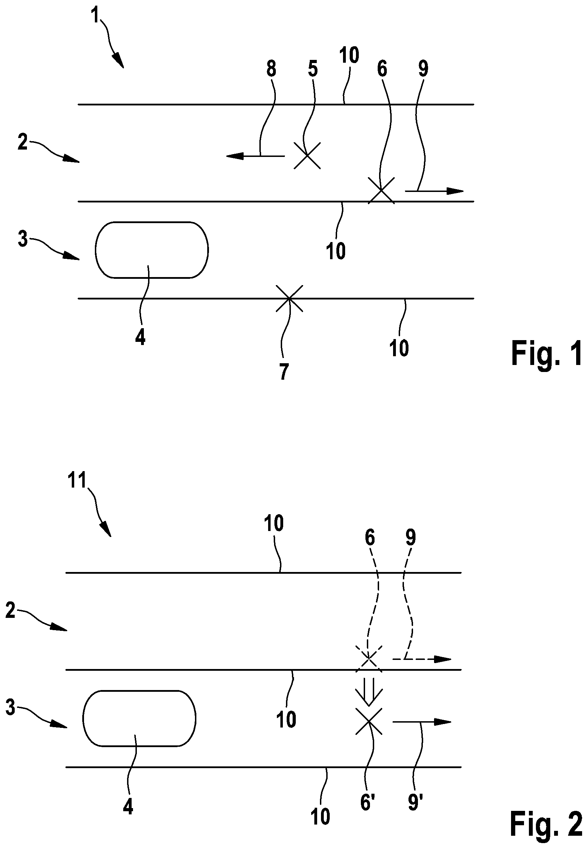

In Figur 1 ist eine Darstellung 1, welche unmittelbar aus einer Messung resultiert, dargestellt. Zu sehen ist eine Straße mit zwei Fahrspuren 2,3, welche durch Fahrbahnrandbegrenzungen 10 jeweils abgetrennt sind. Auf der Fahrspur 3 befindet sich das Kraftfahrzeug 4, welches auch mit einem Ausführungsbeispiel der Erfindung, insbesondere also auch mit Sensorvorrichtungen zur Durchführung der Messung ausgestattet ist. Gemäß Figur 1 hat folglich das Fahrerassistenzsystem die beiden Fahrspuren 2, 3 mit den zugehörigen Fahrbahnrandmarkierungen 10 erkannt sowie außerdem die Objekte 5, 6, 7. Den Objekten 5 und 6 sind jeweils Bewegungen zugeordnet, welche in der Figur durch die entsprechenden Pfeile 8, 9 verdeutlicht werden. Die Darstellungsweise der Objekte 5, 6, 7 als "X" ist willkürlich gewählt. Je nach Art des Objektes könnten hierfür auch andere Darstellungsweisen verwendet werden. Beispielsweise handelt es sich bei den Objekten 5, 6 um sich bewegende Fahrzeuge, während das Objekt 7 z.B. ein am rechten Fahrbahnrand der Fahrspur 3 befindliches parkendes Auto darstellen kann.

In Figur 2 ist eine schematische Anzeigedarstellung 11 zu sehen, in welcher bereits eine Korrektur eines Messfehlers berücksichtigt ist, die vom erfindungsgemäßen Ausführungsbeispiel vorgenommen wurde. Zunächst ist in gleicher Weise das Kraftfahrzeug 4 an gleicher Position auf der Fahrspur 3 zu sehen. Außerdem ist analog zur Figur 1 die Fahrspur 2 sowie die zugehörigen Fahrbahnrandmarkierungen 10 ersichtlich. Als Darstellungsweise ist hier eine Anzeige zu sehen, wonach für den Fahrer augenblicklich unwichtige Objekte, z.B. solche, die sich auf der Fahrspur 2 befinden, ausgeblendet werden. Dies stellt eine Ausführungsform der Erfindung dar, bei der den Koordinaten eines Objekts 5 durch das erfindungsgemäße Fahrerassistenzsystem weitere Daten, nämlich die Position auf Fahrspur 2, zugeordnet werden. Bei der weiteren Auswertung wird dieses Objekt 5, da es nicht der Fahrspur 3 zugeordnet ist, ausgeblendet. In Figur 1 befanden sich die Objekte 5, 6 auf der gleichen Fahrspur 2, bewegten sich jedoch in unterschiedliche Richtungen 8, 9. Da es sich bei der Positionsbestimmung von Objekt 6 um eine fehlerbehaftete Messung gehandelt hat, wird dieser Messfehler anhand der Ausführungsformen des erfindungsgemäßen Fahrerassistenzsystems korrigiert. Diese Korrektur ist in Figur 2 folgendermaßen dargestellt: Das Objekt 6 sowie die zugehörige Bewegungsrichtung 9, welche beide korrekturbedürftig sind, sind gestrichelt in Figur 2 angezeigt. Die Darstellung von Objekt 6' mit der zugehörigen Bewegungsrichtung 9' stellt bereits die korrigierte Positionsangabe zur Verfügung. Anhand dieses Beispiels wird verdeutlicht, welche Tragweite mit der Erfindung verbunden sein kann. Während in der Darstellung der fehlerbehafteten Messung aus Figur 1 das Objekt 6 noch eine Art "Geisterfahrer" darstellt, wird in Figur 2 durch die Korrektur gezeigt, dass es sich um eine normale Fahrsituation handelt und sich das Objekt 6 bzw. 6' in vorschriftsmäßiger Weise auf der Fahrspur 3 und nicht auf der Fahrspur 2, und somit entgegen der vorgeschriebenen Fahrtrichtung bewegt.

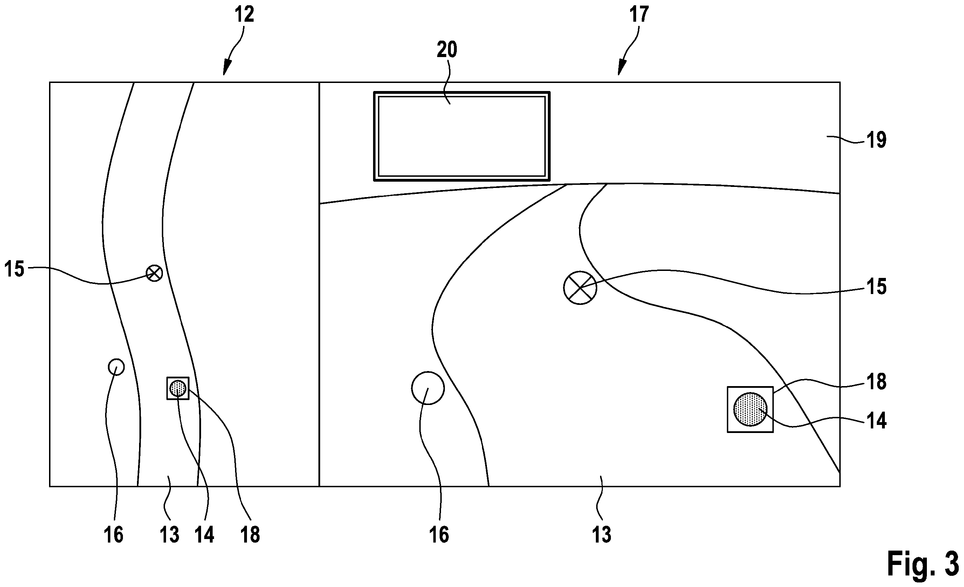

In Figur 3 ist ein Beispiel für eine kombinierte Darstellung 12, 17 mehrerer Perspektiven zu sehen. Ein Ausführungsbeispiel eines erfindungsgemäßen Fahrerassistenzsystems könnte mittels einer HUD diese Anzeigedarstellung einem Fahrer zur Verfügung stellen. Darstellung 12 zeigt eine schematische Ansicht aus der Vogelperspektive mit einer Straße 13, dem Kraftfahrzeug 14 sowie zwei anderen Objekten 15, 16. Das Kraftfahrzeug 14, welches mit dem Fahrerassistenzsystem sowie den zugehörigen Sensoren ausgestattet ist, ist durch eine Umrandungsmarkierung 18 gekennzeichnet. Das Objekt 15 ist willkürlich mit einem Kreuz gekennzeichnet. Diese Darstellungsweise ist lediglich der Einfachheit halber gewählt. Je nach gewünschter Ausführungsform könnte beispielsweise eine farbliche Gestaltung bevorzugt werden. Die Objekte 15, 16 könnten beispielsweise Fahrzeuge aber auch etwaige Hindernisse oder beispielsweise auch Tiere bezeichnen, welche sich auf oder in der Nähe der Fahrbahn befinden. In bevorzugter Weise könnten hier auch konkrete Darstellungen der Objekte oder zumindest Symbole, welche unmittelbar auf die Art des Objekts schließen lassen, angezeigt werden, z.B. ein Tier- oder Fahrzeugsymbol. Eine perspektivische Ansicht, ähnlich die der Fahrerperspektive, ist in der Darstellung 17 zu sehen. Zu erkennen ist der Verlauf der Straße 13, der Horizont 19, das Kraftfahrzeug 14 mit dem Fahrerassistenzsystem, die zugehörige Markierung 18 des Kraftfahrzeugs 14, das Objekt 15, das sich auf der Straße 13 befindet sowie das Objekt 16, welches sich am linken Fahrbahnrand aufhält. Außerdem ist ein Anzeigefenster 20 zu sehen. Dieses kann beispielsweise numerische Angaben über die Geschwindigkeiten des Fahrzeugs 14, der Objekte 15, 16 bzw. ihre Relativgeschwindigkeiten untereinander oder aber z.B. auch die Distanzen einzelner Objekte bzw. Fahrzeuge 14, 15, 16 zueinander anzeigen. Das Fahrerassistenzsystem kann dabei so gestaltet sein, dass einige dieser Informationen aus Sensordaten gewonnen werden, welche mittels Sensorvorrichtungen am Kraftfahrzeug 14 gemessen sind sowie unter Einbeziehung von Umgebungskoordinaten, welche über ein Navigationssystem (z.B. für GPS, Galileo usw.) empfangen wurden.

## Patentansprüche

1. Fahrerassistenzsystem für Kraftfahrzeuge (4, 14) umfassend:
- wenigstens eine Sensorvorrichtung zur Erfassung und Positionsbestimmung von Objekten (5, 6, 7, 10, 15, 16) in der Umgebung des Kraftfahrzeugs (4, 14),
- wenigstens eine Auswerteeinheit zur Verarbeitung und/oder Auswertung der Sensordaten der Sensorvorrichtung sowie Weiterleitung an eine Anzeigevorrichtung, wobei die Auswerteeinheit Mittel zur Korrektur von Messfehlern umfasst, **dadurch gekennzeichnet, dass** die Mittel die Umgebungskoordinaten eines Navigationssystems zusammen mit Sensordaten wenigstens einer Sensorvorrichtung in Bezug auf ein Objekt heranziehen, um daraus eine Koordinate des Objekts zu bestimmen **dadurch gekennzeichnet, dass** die Auswerteeinheit den Koordinaten des Objekts Sensordaten und/oder Umgebungskoordinaten des Navigationssystems zuordnet und hieraus weitere Daten erzeugt und dass die Auswerteeinheit zur Erstellung einer Darstellung (11, 12) wenigstens eines Teils der Umgebung aus der Vogelperspektive ausgelegt ist.

2. Fahrerassistenzsystem nach einem der vorgenannten Ansprüche, **dadurch gekennzeichnet, dass** die Auswerteeinheit eine statistische Mittelungseinheit zur Mittelung von Sensordaten und/oder Umgebungskoordinaten umfasst.

3. Fahrerassistenzsystem nach einem der vorgenannten Ansprüche, **dadurch gekennzeichnet, dass** wenigstens eine weitere Sensorvorrichtung und/oder eine Kamera zur Lieferung von Sensordaten und/oder Umgebungskoordinaten an die Auswerteeinheit vorgesehen ist/sind.

4. Fahrerassistenzsystem nach einem der vorgenannten Ansprüche, **dadurch gekennzeichnet, dass** eine Sensorvorrichtung zur Erkennung einer Fahrspur ausgebildet ist.

5. Fahrerassistenzsystem nach einem der vorgenannten Ansprüche, **dadurch gekennzeichnet, dass** die Auswerteeinheit zur Bestimmung der Relativgeschwindigkeiten zwischen dem Kraftfahrzeug und den Objekten (5, 6, 7, 10, 15, 16) ausgelegt ist.

6. Fahrerassistenzsystem nach einem der vorgenannten Ansprüche, **dadurch gekennzeichnet, dass** die Auswerteeinheit dazu ausgelegt ist, eines der Objekte (5, 6, 7, 10, 15, 16) mit einer Gefährdungsgröße, u. a. aus der Position und/oder der Relativgeschwindigkeit zwischen dem Kraftfahrzeug und dem Objekt (5, 6, 7, 10, 15, 16), zu verknüpfen.

7. Fahrerassistenzsystem nach einem der vorgenannten Ansprüche, **dadurch gekennzeichnet, dass** Warnvorrichtungen vorhanden sind.

8. Fahrerassistenzsystem nach einem der vorgenannten Ansprüche, **dadurch gekennzeichnet, dass** eine Anzeigevorrichtung, insbesondere ein Head-up-Display, vorhanden ist.

9. Fahrerassistenzsystem nach einem der vorgenannten Ansprüche, **dadurch gekennzeichnet, dass** die Anzeigevorrichtung als PDA und/oder Navigationsanzeige und/oder Kopfstützendisplay ausgebildet ist.

10. Fahrerassistenzsystem nach einem der vorgenannten Ansprüche, **dadurch gekennzeichnet, dass** die Anzeigevorrichtung im Kombi-Instrument des Kraftfahrzeugs (4, 14) integriert ist.

11. Fahrerassistenzsystem nach einem der vorgenannten Ansprüche, **dadurch gekennzeichnet, dass** das Fahrerassistenzsystem integrierbar in Fahrzeuge mit bereits vorhandenen Sensorvorrichtungen und/oder Anzeigevorrichtungen und/oder Navigationssystemen ist.

12. Fahrerassistenzsystem nach einem der vorgenannten Ansprüche, **dadurch gekennzeichnet, dass** die Auswerteeinheit zur Zuordnung von Gefährdungsgrößen und Farben für die Darstellung mittels der Anzeigevorrichtung ausgelegt ist.

13. Fahrerassistenzsystem nach einem der vorgenannten Ansprüche, **dadurch gekennzeichnet, dass** die Auswerteeinheit zur Ausgabe und Darstellung (20) alphanumerischer Größen ausgelegt ist.

## Claims

1. Driver assistance system for motor vehicles (4, 14), comprising:
- at least one sensor apparatus for detecting and determining the position of objects (5, 6, 7, 10, 15, 16) in the environment of the motor vehicle (4, 14),
- at least one evaluation unit for processing and/or evaluating the sensor data from the sensor apparatus and for forwarding said data to a display apparatus, the evaluation unit comprising means for correcting measurement errors, **characterized in that** the means use the environmental coordinates from a navigation system, together with sensor data from at least one sensor apparatus, with respect to an object in order to determine a coordinate of the object therefrom, **characterized in that** the evaluation unit assigns sensor data and/or environmental coordinates from the navigation system to the coordinates of the object and generates further data therefrom, and **in that** the evaluation unit is designed to create a representation (11, 12) of at least one part of the environment from a bird's eye view.

2. Driver assistance system according to one of the abovementioned claims, **characterized in that** the evaluation unit comprises a statistical averaging unit for averaging sensor data and/or environmental coordinates.

3. Driver assistance system according to one of the abovementioned claims, **characterized in that** at least one further sensor apparatus and/or a camera is/are provided for the purpose of providing the evaluation unit with sensor data and/or environmental coordinates.

4. Driver assistance system according to one of the abovementioned claims, **characterized in that** a sensor apparatus is designed to detect a lane.

5. Driver assistance system according to one of the abovementioned claims, **characterized in that** the evaluation unit is designed to determine the relative speeds between the motor vehicle and the objects (5, 6, 7, 10, 15, 16).

6. Driver assistance system according to one of the abovementioned claims, **characterized in that** the evaluation unit is designed to link one of the objects (5, 6, 7, 10, 15, 16) to a hazard variable, inter alia from the position and/or the relative speed between the motor vehicle and the object (5, 6, 7, 10, 15, 16).

7. Driver assistance system according to one of the abovementioned claims, **characterized in that** warning apparatuses are provided.

8. Driver assistance system according to one of the abovementioned claims, **characterized in that** a display apparatus, in particular a head-up display, is provided.

9. Driver assistance system according to one of the abovementioned claims, **characterized in that** the display apparatus is in the form of a PDA and/or a navigation display and/or a headrest display.

10. Driver assistance system according to one of the abovementioned claims, **characterized in that** the display apparatus is integrated in the combination instrument of the motor vehicle (4, 14).

11. Driver assistance system according to one of the abovementioned claims, **characterized in that** the driver assistance system can be integrated in vehicles having sensor apparatuses and/or display apparatuses and/or navigation systems which are already provided.

12. Driver assistance system according to one of the abovementioned claims, **characterized in that** the evaluation unit is designed to assign hazard variables and colours for the representation by means of the display apparatus.

13. Driver assistance system according to one of the abovementioned claims, **characterized in that** the evaluation unit is designed to output and represent (20) alphanumeric variables.

## Revendications

1. Système d'assistance à la conduite pour véhicules automobiles (4, 14) comprenant :
- au moins un dispositif capteur destiné à détecter et à déterminer la position d'objets (5, 6, 7, 10, 15, 16) dans l'environnement du véhicule automobile (4, 14),
- au moins une unité d'évaluation destinée à traiter et/ou à évaluer les données de capteurs du dispositif capteur et à les envoyer à un dispositif d'affichage, dans lequel l'unité d'évaluation comprend des moyens destinés à corriger des erreurs de mesure, **caractérisé en ce que** les moyens utilisent les coordonnées d'environnement d'un système de navigation en association avec des données de capteurs d'au moins un dispositif capteur concernant un objet afin de déterminer à partir de celles-ci une coordonnée de l'objet, **caractérisé en ce que** l'unité d'évaluation associe aux coordonnées de l'objet des données de capteur et/ou des coordonnées d'environnement du système de navigation et génère à partir de celles-ci d'autres données et **en ce que** l'unité d'évaluation est conçue pour créer une représentation (11, 12) d'au moins une partie de l'environnement en perspective aérienne.

2. Système d'assistance à la conduite selon l'une quelconque des revendications précédentes, **caractérisé en ce que** l'unité d'évaluation comprend une unité de calcul de moyenne statistique destinée à calculer la moyenne de données de capteur et/ou de coordonnées d'environnement.

3. Système d'assistance à la conduite selon l'une quelconque des revendications précédentes, **caractérisé en ce qu'**il est prévu au moins un autre dispositif capteur et/ou une caméra destinés à délivrer des données de capteur et/ou des coordonnées d'environnement à l'unité d'évaluation.

4. Système d'assistance à la conduite selon l'une quelconque des revendications précédentes, **caractérisé en ce qu'**un dispositif capteur est conçu pour reconnaître une voie de circulation.

5. Système d'assistance à la conduite selon l'une quelconque des revendications précédentes, **caractérisé en ce que** l'unité d'évaluation est conçue pour déterminer la vitesse relative entre le véhicule et les objets (5, 6, 7, 10, 15, 16).

6. Système d'assistance à la conduite selon l'une quelconque des revendications précédentes, **caractérisé en ce que** l'unité d'évaluation est conçue pour combiner l'un des objets (5, 6, 7, 10, 15, 16) à une grandeur de risque, entre autres à partir de la position et/ou de la vitesse relative entre le véhicule et l'objet (5, 6, 7, 10, 15, 16).

7. Système d'assistance à la conduite selon l'une quelconque des revendications précédentes, **caractérisé en ce qu'**il est prévu des dispositifs d'alarme.

8. Système d'assistance à la conduite selon l'une quelconque des revendications précédentes, **caractérisé en ce qu'**il est prévu un dispositif d'affichage, notamment un dispositif d'affichage tête haute.

9. Système d'assistance à la conduite selon l'une quelconque des revendications précédentes, **caractérisé en ce que** le dispositif d'affichage est réalisé sous la forme d'un PDA et/ou d'un affichage de navigation et/ou d'un afficheur d'appuie-tête.

10. Système d'assistance à la conduite selon l'une quelconque des revendications précédentes, **caractérisé en ce que** le dispositif d'affichage est intégré au tableau de bord du véhicule automobile (4, 14).

11. Système d'assistance à la conduite selon l'une quelconque des revendications précédentes, **caractérisé en ce que** le système d'aide à la conduite peut être intégré à des véhicules comportant des dispositifs capteurs et/ou des dispositifs d'affichage et/ou des systèmes de navigation déjà présents.

12. Système d'assistance à la conduite selon l'une quelconque des revendications précédentes, **caractérisé en ce que** l'unité d'évaluation est conçue pour associer des grandeurs de risque et des couleurs pour une représentation effectuée au moyen du dispositif d'affichage.

13. Système d'assistance à la conduite selon l'une quelconque des revendications précédentes, **caractérisé en ce que** l'unité d'évaluation est conçue pour délivrer et représenter (20) des grandeurs d'alphanumérique.
